(19) Europäisches Patentamt
European Patent Office
Office européen des brevets

(11) **EP 4 503 828 A1**

(12) **EUROPEAN PATENT APPLICATION**
published in accordance with Art. 153(4) EPC

(43) Date of publication:
**05.02.2025 Bulletin 2025/06**

(21) Application number: **23781228.4**

(22) Date of filing: **22.03.2023**

(51) International Patent Classification (IPC):
*H04W 74/00* (2009.01)    *H04W 74/08* (2024.01)
*H04L 1/08* (2006.01)    *H04L 5/00* (2006.01)

(52) Cooperative Patent Classification (CPC):
**H04L 1/08; H04L 5/00; H04W 74/00; H04W 74/08**

(86) International application number:
**PCT/KR2023/003757**

(87) International publication number:
**WO 2023/191372 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 KR 20220040751**

(71) Applicant: **LG Electronics Inc.**
**Yeongdeungpo-gu**
**Seoul 07336 (KR)**

(72) Inventors:
• **SHIN, Seokmin**
  **Seoul 06772 (KR)**
• **KO, Hyunsoo**
  **Seoul 06772 (KR)**
• **YANG, Suckchel**
  **Seoul 06772 (KR)**
• **KIM, Seonwook**
  **Seoul 06772 (KR)**
• **HWANG, Seunggye**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR PERFORMING UPLINK TRANSMISSION AND RECEPTION IN WIRELESS COMMUNICATION SYSTEM**

(57) Disclosed are a method and device for performing uplink transmission and reception in a wireless communication system. The method by which a terminal performs uplink transmission in a wireless communication system according to an embodiment disclosed herein comprises the steps of: receiving configuration information related to PRACH preamble repetitive transmission from a base station; and performing the PRACH preamble repetitive transmission in one or more ROs among a plurality of ROs on the basis of the configuration information, wherein, a specific RO among the plurality of ROs is dropped on the basis of that the specific RO conflicts with a specific signal or a specific channel, and an RA-RNTI can be calculated on the basis of one or more reference ROs selected from among the remaining ROs other than the specific RO among the plurality of ROs.

FIG.9

```
┌─────────────────────────────────────┐
│ RECEIVING CONFIGURATION INFORMATION  │
│ RELATED TO REPEATED TRANSMISSION OF A│──── S910
│ PRACH PREAMBLE FROM THE BASE STATION │
└─────────────────────────────────────┘
                  │
                  ▼
┌─────────────────────────────────────┐
│ PERFORMING REPEATED TRANSMISSION OF  │
│ THE PRACH PREAMBLE IN AT LEAST ONE OF│──── S920
│ A PLURALITY OF ROS BASED ON          │
│ CONFIGURATION INFORMATION            │
└─────────────────────────────────────┘
```

**Description**

[Technical Field]

The present disclosure relates to a wireless communication system, and more specifically to a method and device for performing uplink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception in a wireless communication system.

In addition, an additional technical problem of the present disclosure is to provide a method and device for calculating RA-RNTI/MSGB-RNTI based on a reference RO when performing PRACH/MSGA preamble repetition transmission.

In addition, an additional technical problem of the present disclosure is to provide a method and device for handling collision between RO and other signals/channels for PRACH/MSGA preamble repetition transmission.

The technical objects to be achieved by the present disclosure are not limited to the above-described technical objects, and other technical objects which are not described herein will be clearly understood by those skilled in the pertinent art from the following description.

[Technical Solution]

According to one embodiment of the present disclosure, a method of performing uplink (UL) transmission by a user equipment (UE) in a wireless communication system may include receiving, from a base station, configuration information related to repeated transmission of a physical random access channel (PRACH) preamble; and performing repeated transmission of the PRACH preamble in at least one of a plurality of ROs (random access channel occasions) based on the configuration information, and based on a specific RO among the plurality of ROs colliding with a specific signal or a specific channel: the specific RO may be dropped, and a RA(random access)-RNTI(radio network temporary identifier) may be calculated based on at least one reference RO determined from a remaining ROs excluding the specific RO among the plurality of ROs.

According to another embodiment of the present disclosure, a method of performing uplink reception by a base station in a wireless communication system may include transmitting, to a user equipment (UE), configuration information related to repeated transmission of a physical random access channel (PRACH) preamble; and performing repeated reception of the PRACH preamble in at least one of a plurality of ROs (random access channel occasions) based on the configuration information, and based on a specific RO among the plurality of ROs colliding with a specific signal or a specific channel: the specific RO may be dropped, and a RA(random access)-RNTI(radio network temporary identifier) may be calculated based on at least one reference RO determined from a remaining ROs excluding the specific RO among the plurality of ROs.

[Technical Effects]

According to an embodiment of the present disclosure, a method and device for performing uplink transmission and reception in a wireless communication system may be provided.

In addition, according to an embodiment of the present disclosure, a method and device for calculating RA-RNTI/MSGB-RNTI based on a reference RO when performing PRACH/MSGA preamble repetition transmission may be provided.

In addition, according to an embodiment of the present disclosure, a method and device for handling collision between RO and other signals/channels for PRACH/MSGA preamble repetition transmission may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates an example of a wireless communication system supporting an unlicensed band applicable to the present disclosure.

FIG. 8 is a diagram illustrating an uplink transmission and reception operation in a wireless communication system to which the present disclosure may be applied.

FIG. 9 is a diagram for describing an uplink transmission operation of a UE in a wireless communication system to which the present disclosure may be applied.

FIG. 10 is a diagram for describing an uplink reception operation of a base station in a wireless communication system to which the present disclosure may be applied.

FIG. 11 is a diagram for describing a method for determining a reference RO according to an embodiment of the present disclosure.

FIG. 12 is a diagram for describing a signaling procedure of a network side and a terminal according to an embodiment of the present disclosure.

FIG. 13 is a block diagram illustrating a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS (General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS (Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211 (physical channels and modulation), TS 36.212(multiplexing and channel coding), TS 36.213(physical layer procedures), TS 36.300(overall description), TS 36.331(radio resource control) may be referred to.

For 3GPP NR, TS 38.211 (physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement

- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

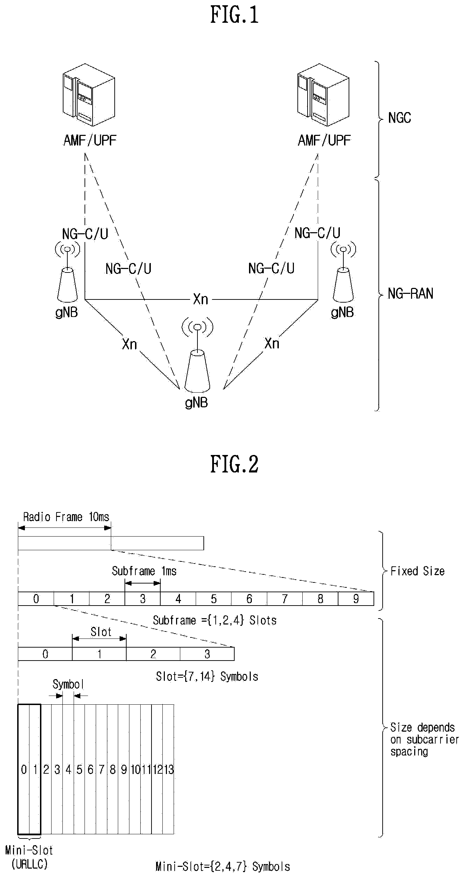

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2) . FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_t = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration p, slots are numbered in an increasing order of $n_s^{\mu}\{0, ..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\ \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship.

In this case, the large-scale property includes at least one of delay spread, doppler spread, frequency shift, average received power, received timing.

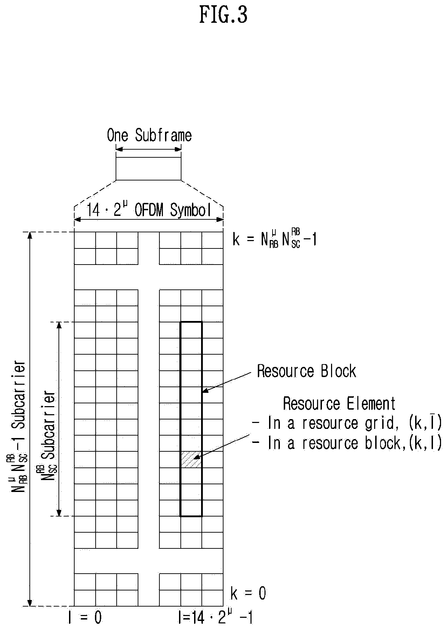

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,..., 2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

- absoluteFrequencyPointA represents a frequency-position of point A expressed as in ARFCN (absolute radiofrequency channel number). Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{Bwp,i}^{start,\mu}$ is a common resource block that a BWP starts relatively to common resource block 0.

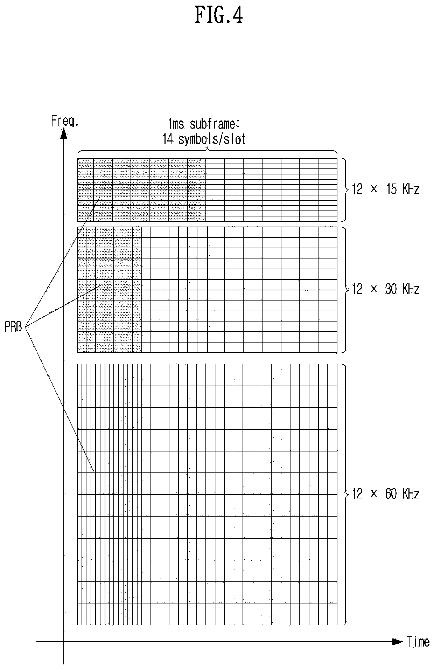

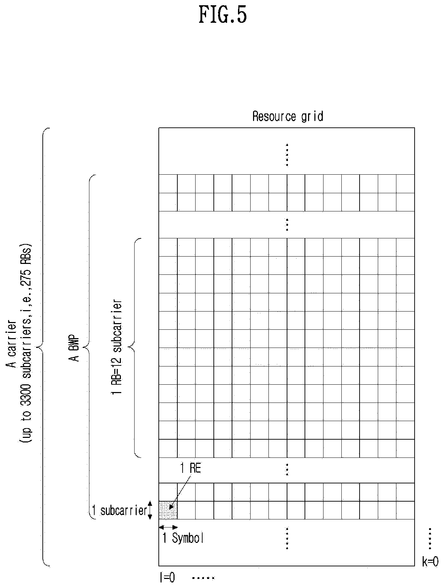

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.).

Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

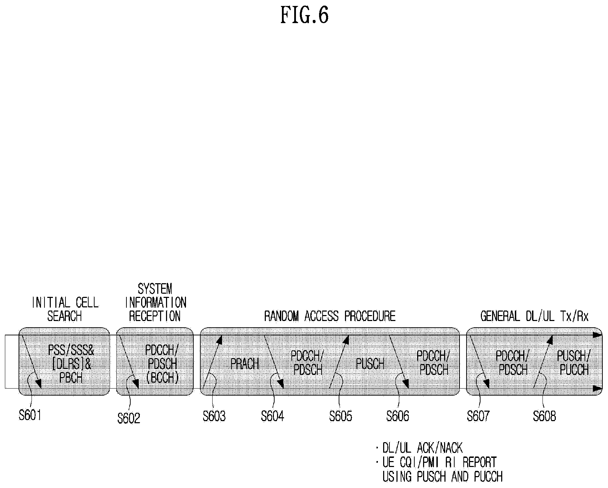

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Wireless communication system supporting unlicensed band/shared spectrum

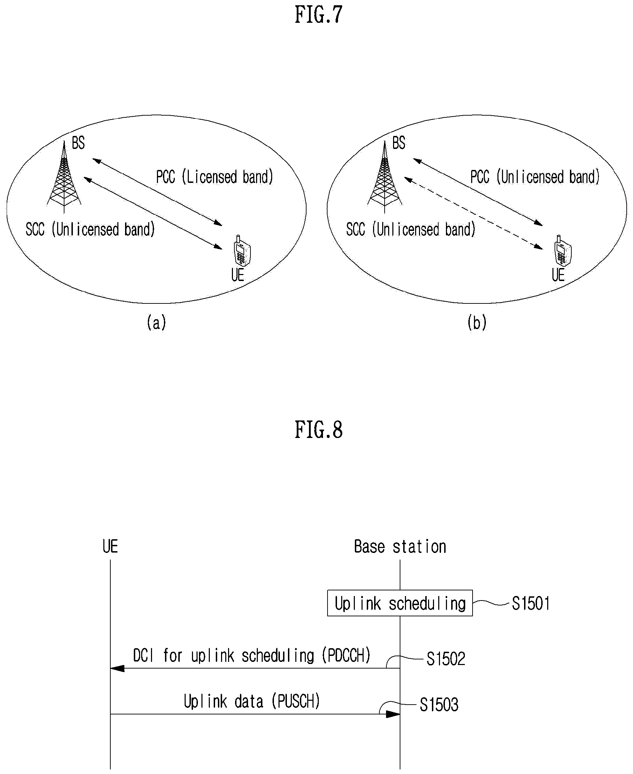

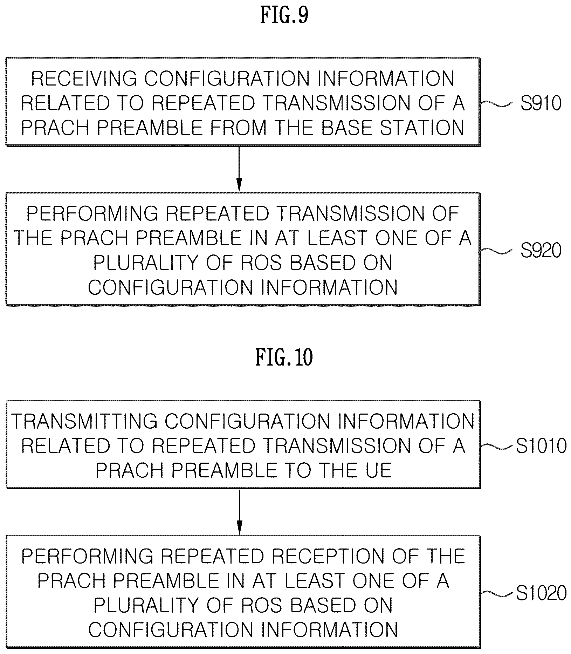

FIG. 7 shows an example of a wireless communication system supporting an unlicensed band applicable to the present disclosure. For example, FIG. 9 illustrates an unlicensed spectrum (NR-U) wireless communication system.

In the following description, a cell operating in a licensed-band (L-band) is defined as an LCell, and a carrier of the LCell is defined as a (downlink/uplink) LCC. In addition, a cell operating in an unlicensed band (U-band) is defined as a UCell, and a carrier of the UCell is defined as a (downlink/uplink) UCC. The carrier/carrier-frequency of a cell may mean an operating frequency (e.g., center frequency) of the cell. A cell/carrier (e.g., a component carrier (CC)) is collectively referred to as a cell.

As shown in (a) of FIG. 7, when a terminal and a base station transmit and receive signals through carrier aggregation (CA) LCC and UCC, the LCC may be configured as a primary CC (PCC) and the UCC may be configured as a secondary CC (SCC). And, as shown in (b) of FIG. 7, the terminal and the base station may transmit and receive signals through one UCC or a plurality of UCCs combined with carriers. That is, the terminal and the base station may transmit and receive signals only through UCC(s) without LCC. For standalone operation, PRACH, PUCCH, PUSCH, SRS transmission, etc. may be supported in UCell.

For example, the unlicensed band may be included in a specific frequency range (e.g., from 52.6 GHz to 71 GHz) higher than the existing frequency range (e.g., FR1 and FR2). The specific frequency range may be referred to as FR2-2 (in this case, the existing FR2 (i.e., 24250 MHz - 52600 MHz) may be referred to as FR2-1) or may be referred to as FR3. The scope of this disclosure is not limited to the designations FR2-2 or FR3.

Uplink transmission and reception operation

FIG. 8 is a diagram illustrating an uplink transmission and reception operation in a wireless communication system to which the present disclosure can be applied.

Referring to FIG. 8, a base station schedules uplink transmission such as a frequency/time resource, a transport layer, an uplink precoder, an MCS, etc. (S1501). In particular, a base station can determine a beam for PUSCH transmission to a UE through the operations described above.

A UE receives DCI for uplink scheduling (i.e., including scheduling information of a PUSCH) from a base station on a PDCCH (S1502).

DCI format 0_0, 0_1, or 0_2 may be used for uplink scheduling, and in particular, DCI format 0_1 includes the following information: an identifier for a DCI format, a UL/SUL (supplementary uplink) indicator, a bandwidth part indicator, a frequency domain resource assignment, a time domain resource assignment, a frequency hopping flag, a modulation and coding scheme (MCS), an SRS resource indicator (SRI), precoding information and number of layers, antenna port(s), an SRS request, a DMRS sequence initialization, a UL-SCH (Uplink Shared Channel) indicator

In particular, SRS resources configured in an SRS resource set associated with the higher upper layer parameter 'usage' may be indicated by an SRS resource indicator field. Additionally, the 'spatialRelationInfo' can be configured for each SRS resource, and its value can be one of {CRI, SSB, SRI}.

A UE transmits uplink data to a base station on a PUSCH (S1503).

When a UE detects a PDCCH including DCI formats 0_0, 0_1, and 0_2, it transmits a PUSCH according to indications by corresponding DCI.

Two transmission methods are supported for PUSCH transmission: codebook-based transmission and non-codebook-based transmission:

i) When the higher layer parameter 'txConfig' is set to 'codebook', a UE is configured to codebook-based transmission. On the other hand, when the higher layer parameter 'txConfig' is set to 'nonCodebook', a UE is configured to non-codebook based transmission. If the up higher per layer parameter 'txConfig' is not set, a UE does not expect to be scheduled by DCI format 0_1. When a PUSCH is scheduled by DCI format 0_0, PUSCH transmission is based on a single antenna port.

For codebook-based transmission, a PUSCH may be scheduled in DCI format 0_0, DCI format 0_1, DCI format 0_2, or semi-statically. If this PUSCH is scheduled by DCI format 0_1, a UE determines a PUSCH transmission precoder based on an SRI, a TPMI (Transmit Precoding Matrix Indicator), and a transmission rank from DCI, as given by an SRS resource indicator field and a precoding information and number of layers field. A TPMI is used to indicate a precoder to be applied across antenna ports, and corresponds to an SRS resource selected by an SRI when multiple SRS resources are configured.

Alternatively, if a single SRS resource is configured, a TPMI is used to indicate a precoder to be applied across antenna ports and corresponds to that single SRS resource. A transmission precoder is selected from an uplink codebook having the same number of antenna ports as the higher layer parameter 'nrofSRS-Ports'. When a UE is configured with the higher layer parameter 'txConfig' set to 'codebook', the UE is configured with at least one SRS resource. An SRI indicated in slot n is associated with the most recent transmission of an SRS resource identified by the SRI, where the SRS resource precedes a PDCCH carrying the SRI (i.e., slot n).

ii) For non-codebook based transmission, a PUSCH may be scheduled in DCI format 0_0, DCI format 0_1, or semi-statically. When multiple SRS resources are configured, a UE can determine a PUSCH precoder and a transmission rank based on a wideband SRI, where, the SRI is given by an SRS resource indicator in DCI or by the higher layer parameter 'srs-ResourceIndicator' .

A UE uses one or multiple SRS resources for SRS transmission, where the number of SRS resources can be configured for simultaneous transmission within the same RB based on a UE capability. Only one SRS port is configured for each SRS resource. Only one SRS resource can be configured with the higher layer parameter 'usage' set to 'nonCodebook'. The maximum number of SRS resources that can be configured for non-codebook based uplink transmission is 4. An SRI indicated in slot n is associated with the most recent transmission of an SRS resource identified by the SRI, where the SRS transmission precedes a PDCCH carrying the SRI (i.e., slot n).

PRACH repetition transmission method

In order to improve UL coverage of a basic wireless communication system, a PRACH preamble repetition transmission operation may be performed. Hereinafter, a method for a terminal to enable PRACH preamble repetition transmission (or/and Msg. 3 PUSCH repetition transmission) according to an embodiment of the present disclosure will be described in detail.

Here, in the 4-step RACH procedure, Msg. 1 (message 1) may include a preamble (i.e., a PRACH preamble). Msg. 2 may include a random access response (RAR) corresponding to Msg 1. Msg. 3 may include a PUSCH based on uplink resource allocation information provided by the RAR.

The present disclosure may be applied in combination with the above-described contents (e.g., NR frame structure, RACH procedure, U-band system, etc.). In addition, the methods related to configuring PRACH transmission occasions to be described later may be equally applied to an uplink signal transmission and reception method.

For example, uplink transmission through methods related to PRACH transmission opportunity configuration described later can be performed in an L-cell and/or U-cell defined in an NR system or a U-Band system.

In a basic wireless communication system, a PRACH preamble can be repeatedly transmitted to enhance UL coverage (coverage enhancement).

The RA-RNTI associated with a PRACH occasion in which a random access preamble is transmitted can be calculated according to Equation 3.

$$\text{RA-RNTI} = 1 + s\_id + 14 * t\_id + 14 * 80 * f\_id + 14 * 80 * 8 * ul\_carrier\_id \qquad \text{[Equation 3]}$$

Here, s_id (e.g., $0 \leq s\_id < 14$) is the index of the first OFDM symbol of the PRACH occasion. t_id (e.g., $0 \leq t\_id < 80$) is the index of the first slot of the PRACH occasion in a system frame. The SCS for determining t_id may be based on the value of $\mu$ (i.e., the SCS associated with the PRACH transmission). f_id (e.g., $0 \leq f\_id < 8$) is an index of a PRACH occasion in the frequency domain. ul_carrier_id may be a UL carrier used for random access preamble transmission. For example, for a NUL carrier, ul_carrier_id may be 0, and for a SUL carrier, ul_carrier_id may be 1.

MSGB-RNTI related to the PRACH occasion at which the random access preamble is transmitted may be calculated according to the Equation 4.

$$\text{MSGB-RNTI} = 1 + s\_id + 14 * t\_id + 14 * 80 * f\_id + 14 * 80 * 8 * ul\_carrier\_id + 14 * 80 * 8 * 2 \qquad \text{[Equation 4]}$$

Here, s_id (e.g., $0 \leq s\_id < 14$) is an index of a first OFDM symbol of a PRACH occasion. t_id (e.g., $0 \leq t\_id < 80$) is an index of a first slot of the PRACH occasion in a system frame. The SCS for determining t_id may be based on the $\mu$ value (i.e., the SCS associated with the PRACH transmission). f_id (e.g., $0 \leq f\_id < 8$) is an index of a PRACH occasion in the frequency domain. ul_carrier_id may be a UL carrier used for random access preamble transmission. For example, for a NUL carrier, ul_carrier_id may be 0, and for a SUL carrier, ul_carrier_id may be 1.

Here, when performing PRACH preamble repetition transmission according to the existing method, the UE cannot arbitrarily determine the RO to be used in Equation 3 and/or Equation 4 (i.e., the RO for determining s_id, f_id, t_id). Accordingly, there may be a problem that the terminal cannot accurately calculate the RA-RNTI and/or MSGB-RNTI values.

Hereinafter, in order to solve the above-described problem, a method of setting RA-RNTI when PRACH (or/and Msg. A) preamble repetition transmission operation is defined will be described.

FIG. 9 is a diagram for describing an uplink transmission operation of a terminal in a wireless communication system to which the present disclosure may be applied.

The UE may receive configuration information related to repeated transmission of a PRACH preamble from the base station (S910).

Here, the UE may transmit to the base station first UE capability information indicating that it supports PRACH preamble repeated transmission and/or second UE capability information indicating that it supports physical uplink shared channel (PUSCH) repeated transmission based on RAR (i.e., RAR for PRACH preamble transmission).

For example, configuration information related to repeated transmission of a PRACH preamble may include the number of repeated transmissions of the PRACH preamble, information related to time/frequency resources for repeated transmission of the PRACH preamble, and information related to a PRACH preamble index, etc.

The operation according to S910 can also be applied to repeated transmission of a MSGA preamble. That is, the PRACH preamble in the operation according to S910 and related configuration information can be replaced with the MSGA preamble.

The UE may perform repeated transmission of the PRACH preamble in at least one of a plurality of ROs based on configuration information (S920).

Here, based on a specific RO among a plurality of ROs colliding with a specific signal or a specific channel, the UE may drop the specific RO. The UE may calculate RA-RNTI based on one or more criteria (reference RO) determined in the remaining ROs excluding the specific RO among the a plurality of ROs. And, the UE may perform PRACH preamble transmission in the remaining ROs excluding the specific RO among a plurality of ROs.

Here, a specific signal or a specific channel may mean a signal or channel scheduled/activated/configured by the base station. That is, if a resource corresponding to a signal or channel scheduled/activated/configured by the base station overlaps/collides with a resource corresponding to a specific RO, the UE may drop the specific RO.

For example, the UE may calculate one or more RA-RNTIs based on an index of a first symbol of one or more reference ROs, an index of a first slot of one or more reference ROs in a system frame, an index of one or more reference ROs in the frequency domain, and an index of an uplink carrier used for repeated transmission of a PRACH preamble.

Here, the number of reference ROs may be 1, but is not limited thereto and may be 2 or more.

For example, the reference RO may be a single RO selected from the remaining ROs after excluding a specific RO from among a plurality of ROs, which may be the first RO or the last RO among the remaining ROs.

And, the UE may receive an RAR including an SFN (system frame number) value corresponding to a single reference RO from the base station. The UE may determine whether the RAR is an RAR for the UE through an RA-RNTI calculated based on the single reference RO and an SFN corresponding to the single reference RO.

That is, the UE may determine whether the RAR is a RAR transmitted for the UE by comparing the RA-RNTI calculated based on the single reference RO and the SFN corresponding to the single reference RO with the corresponding information included in the RAR.

As an example of the present disclosure, based on a plurality of reference ROs being determined from the remaining ROs excluding a specific RO among a plurality of reference ROs, the UE may calculate an RA-RNTI based on a reference RO from which a last PRACH preamble is transmitted among the plurality of reference ROs.

Additionally or alternatively, the UE may receive information on at least one reference RO from the base station via higher layer signaling (e.g., SIB, RRC signaling, etc.). In this case, the higher layer signaling may include configuration information related to repeated transmission of the PRACH preamble.

However, this is only one embodiment, and information on at least one reference RO and configuration information related to repeated transmission of PRACH preambles may be independently transmitted from the base station to the UE.

Additionally or alternatively, based on higher layer signaling including information on at least one reference RO being not received from the base station, one or more of the reference ROs may be determined as a predefined default RO.

Additionally or alternatively, the UE may receive configuration information related to a preamble index hopping operation associated with PRACH preamble repetition transmission from the base station. The UE may perform preamble index hopping and PRACH preamble repetition transmission based on the configuration information related to the preamble index hopping operation and/or the configuration information related to PRACH preamble repetition transmission.

Here, the configuration information related to the preamble index hopping operation may include at least one of information on a preamble index pool for repeated transmission of a PRACH preamble or information on an RO allocated for preamble index hopping.

The operation and configuration information related to S920 can also be applied to MSGA preamble transmission and MSGB reception operations.

That is, the PRACH preamble and RAR in S920 can be replaced with the MSGA preamble and MSGB, respectively. And, the RA-RNTI in S920 can be replaced with the MSGB-RNTI.

FIG. 10 is a diagram for describing an uplink transmission operation of a base station in a wireless communication system to which the present disclosure can be applied.

The base station may transmit configuration information related to repeated transmission of a PRACH preamble to the UE (S1010).

For example, based on receiving first UE capability information related to repeated transmission of a PRACH preamble from a UE, the base station may transmit configuration information related to repeated transmission of the PRACH preamble to the UE.

The operations and parameters according to S1010 can correspond to the operations and parameters according to S910, so redundant descriptions are omitted.

The base station may perform repeated reception of the PRACH preamble in at least one RO among a plurality of ROs based on the configuration information related to repeated transmission of the PRACH preamble (S1020).

For example, a specific signal or a specific channel scheduled/activated/configured by a base station may overlap/collide with time/frequency resources corresponding to a specific RO among multiple ROs. Here, the specific RO may be dropped by the UE, and the base station may perform repeated reception of the PRACH preamble in the remaining ROs except for the specific RO among the plurality of ROs.

The operations and parameters related to S1020 can correspond to the operations and parameters related to S920, so redundant descriptions are omitted.

Hereinafter, the RA-RNTI design for PRACH repeated transmission, the RO collision handling method for PRACH repeated transmission, and the RAPID hopping method for PRACH repeated transmission are described in detail.

Embodiment 1

In a basic wireless communication system, since repeated transmission of the PRACH is not performed, the UE may obtain one s_id, f_id, and t_id for the RO selected to transmit the PRACH preamble, and can calculate the RA-RNTI (or MSGB-RNTI) based on this.

In an enhanced wireless communication system, if PRACH repeated transmission is supported for a UE/base station and the base station configures the UE to repeatedly transmit a PRACH preamble (or, MSGA preamble), the UE may repeatedly transmit the PRACH preamble across a plurality of ROs.

Embodiments 1-1, 1-2, and 1-3 relate to a method for a UE to calculate an RA-RNTI (or MSGB-RNTI) when performing repeated transmission of a PRACH preamble using multiple ROs.

Embodiment 1-1

The UE may configure a specific RO among a plurality of ROs that have transmitted a PRACH preamble as a reference RO, and may calculate an RA-RNTI (or MSGB-RNTI) based on the configured reference RO. That is, the UE may be configured to calculate an RA-RNTI (or MSGB-RNTI) based on the s_id, f_id, and t_id values of the reference RO.

Here, the reference RO may be predefined between the UE and the base station. Additionally or alternatively, the base station may configure/indicate the UE to configure/indicate the UE to the reference RO together with the PRACH configuration through RRC signaling. Accordingly, the UE may calculate the RA-RNTI and/or the MSGB-RNTI using the Equations 3 and/or 4.

In another example of the present disclosure, the reference RO may be the last RO among a plurality of ROs for which the UE repeatedly transmits the preamble. Even if the ROs required for repeated transmission exceed the PRACH period boundary (i.e., 10 ms), the above-described example (i.e., the method of defining/configuring/indicating the reference RO as the last RO) may be applied.

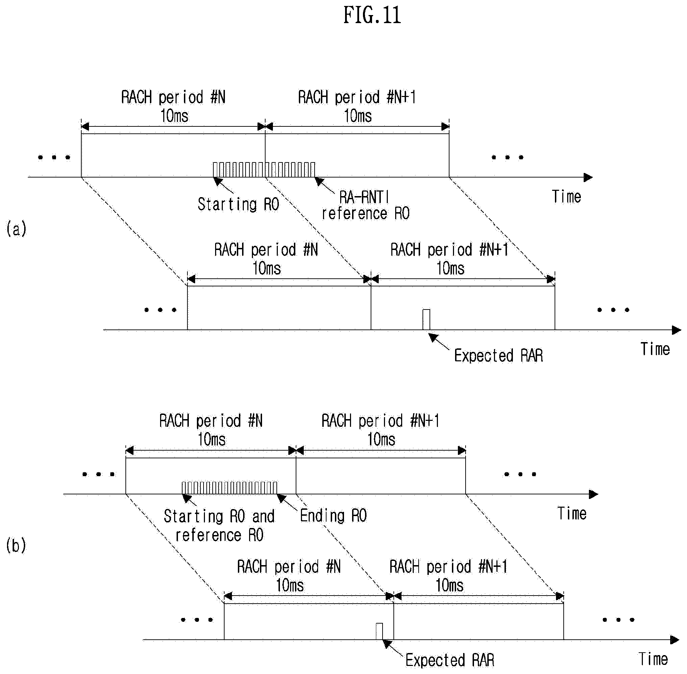

FIG. 11(a) is a diagram for describing a method of setting the last RO among a plurality of ROs as a reference RO according to one embodiment of the present disclosure.

Referring to FIG. 11(a), it is assumed that the RO for the UE to repeatedly transmit the preamble starts from RACH period #N (i.e., starts from the start RO) and exists until RACH period #N+1 (i.e., RA-RNTI reference RO).

The last RO among the ROs used for repeated transmission may be configured/indicated/defined as a reference RO for RA-RNTI calculation, and the UE may receive an RAR from the base station using the RA-RNTI calculated based on the reference RO in RAR window #N+1. Here, the UE may use the s_id, f_id, and t_id values associated with the reference RO for RA-RNTI calculation, and may receive a RAR UL grant using the preamble index transmitted in the reference RO as RAPID.

In another example of the present disclosure, the reference RO may be the first RO among a plurality of ROs in which the UE repeatedly transmits the preamble. Even if the ROs required for repeated preamble transmission exceed the RACH interval boundary (i.e., 10 ms), the above-described example (i.e., the method of defining/setting/indicating the reference RO as the first RO) may be applied. In addition, it may be preferable that the above-described example be applied when the base station knows the RO in which the UE starts repeated transmission and the RO in which the UE ends repeated transmission.

FIG. 11(b) is a diagram for describing a method of setting a first RO among a plurality of ROs as a reference RO according to one embodiment of the present disclosure.

Referring to Fig. 11(b), it is assumed that ROs for repeatedly transmitting preambles by a UE are configured to RACH period #N. Here, the first RO among the ROs used for the repeated transmission may be configured as a reference RO for RA-RNTI calculation. Here, the UE may use the s_id, f_id, and t_id values of the reference RO for RA-RNTI calculation, and may receive a RAR UL grant by using the preamble index transmitted to the reference RO as RAPID.

As an example of the present disclosure, when a UE attempts to perform repeated preamble transmissions for the number of repetitions configured/indicated by a base station, there may be cases where ROs required for repeated transmissions (based on SSB-to-RO mapping and/or RACH configuration) exceed the RACH period, or the time of the total required ROs exceeds 10 ms.

Here, the UE may be configured/indicated/defined to perform repeated transmission only in ROs that do not exceed the RACH interval (for cases where specific conditions are satisfied). And, the UE may be configured/defined/indicated to interpret the last RO among the ROs actually transmitted as the reference RO.

Here, the specific condition may be a case where the UE performs repeated transmission more than X% of the repetition count configured/indicated by the base station (e.g., X is a threshold value that is predefined or may be configured/indicated by the base station) even if the UE does not perform repeated transmission in ROs that exceed the RACH period.

If the specific conditions are not satisfied, the UE may perform repeated preamble transmission beyond the RACH period, and the RO that transmitted the last preamble may become the reference RO.

As another example of the present disclosure, the base station may configure a reference RO to the UE via higher layer signaling (e.g., SIB, RRC, etc.) (including PRACH configuration). In this case, if ROs required for repeated transmission exist in a section exceeding the RACH period boundary, the UE may be configured not to expect that the reference RO configured by the base station is configured to an RO within the RACH period (e.g., within RACH period # when RO is required, as in (a) of FIG. 11).

The UE may determine that the RAR window starts after transmitting the preamble to the last RO. Accordingly, the UE may expect that the base station will configure a reference RO among the ROs existing in the RACH period including the last RO among the ROs required for repeated transmission.

Additionally or alternatively, if the base station does not configure/indicate the UE to configure/indicate a reference RO (i.e., if the RRC parameters such as PRACH configuration, etc. do not include information related to the reference RO), the UE may use a predefined default reference RO.

The preconfigured default reference RO may be a specific RO (e.g., the very first RO or the very last RO) among the ROs used by the UE for repeated transmission. Alternatively, the preconfigured default reference RO may be a specific RO (e.g., the very first RO or the very last RO) among the ROs configured within the RACH period that includes the very last RO among the ROs used by the UE for repeated transmission.

If a reference RO is configured/indicated from the base station, the UE may be configured to calculate RA-RNTI (or MSGB-RNTI) based on the configured/indicated reference RO. If a reference RO is not configured/indicated from the base station, the UE may be configured to calculate RA-RNTI (or MSGB-RNTI) based on a default reference RO.

In the above-described examples, the UE may determine that the RAR window is configured after the preamble transmission is terminated in the last RO among the ROs for repeated preamble transmission. And, the UE may expect that the RAR will be transmitted from the base station within the corresponding RAR window.

Embodiment 1-2

Among a plurality of ROs that transmitted the preamble, a specific RO (e.g., one RO) may be configured as a reference RO, and additional time information (e.g., SFN, etc.) may be configured/defined for the UE. The UE may calculate RA-RNTI (or MSGB-RNTI) based on the reference RO and the additional time information.

It is assumed that the first RO among the ROs used by the UE for repeated preamble transmission is configured/indicated as the reference RO. Here, if the number of repetitions is large or the interval between ROs for repeated preamble transmission is large, the last RO among the ROs used for repeated transmission may exceed the RACH interval boundary (or the entire preamble repeated transmission interval may exceed 10 ms).

Here, a problem may occur in which the RA-RNTI value calculated based on the reference RO in the RAR window in which the RAR for repeated transmission is transmitted overlaps with the RA-RNTI value of another RO.

To solve the above-described problem, time information may be additionally configured/defined/indicated to the RA-RNTI value.

For example, an SFN (sub-frame) value where the reference RO is located may be used as additional time information. When the base station transmits the SFN value where the reference RO is located to the UE through the RAR UL grant (e.g., through a reserved field such as DCI or RAR), the base station may additionally indicate additional time information to the UE. Here, the UE may determine whether the RAR received from the base station is for the UE based on the RA-RNTI value calculated based on the reference RO and the SFN value where the reference RO is located (e.g., by comparing the SFN where the reference RO is located with the calculated RA-RNTI value).

In the case where the RAR window is longer than 10 ms in the 2-step RACH and/or NR-U 4-step RACH of a basic wireless communication system, the RA-RNTI value may be duplicated, so the base station may additionally instruct the terminal to use SFN to distinguish the RA-RNTI.

If preamble repetition transmission is supported in an enhanced wireless communication system, the RAR window may be fixed to 10 ms. However, the above-described example is an example for solving a problem that occurs when the RO to transmit the actual preamble exceeds the RACH period (or the preamble repetition transmission period exceeds 10 ms).

Accordingly, if the base station is configured/indicated to perform preamble repetition transmission and the preamble repetition transmission satisfies a specific condition, the base station may additionally indicate the UE with additional time information. That is, the UE may expect that the additional time information will be indicated by the base station.

Here, the specific condition may be a case where the last RO among the ROs used in the preamble repetition transmission exceeds the RACH period boundary or a case where the entire preamble repetition transmission exceeds 10 ms. In addition, the additional time information may be the SFN where the reference RO is located, etc.

If the preamble repetition transmission does not satisfy the above specific conditions, the UE may expect that no additional time information will be indicated by the base station.

Embodiment 1-3

Among the plurality of ROs that transmitted the preamble, two or more ROs may be configured as reference ROs, and multiple RA-RNTIs (or MSGB-RNTIs) may be configured based on the reference ROs.

Here, the reference ROs may be predefined between the UE and the base station. Additionally or alternatively, the base station may configure/indicate the UE to configure/indicate a plurality of ROs together with the PRACH configuration through upper layer signaling. Characteristically, the embodiments 1-3 may be applied to a situation where the UE wants to early terminate the preamble repetition transmission.

If an embodiment of early termination of preamble repetition transmission is applied, a specific UE may release RACH resources set in advance for preamble repetition transmission at an appropriate time without continuing to occupy them. Accordingly, there is an advantage in that the base station can operate RACH resources more freely. In addition, since the UE may not have to complete an unnecessary large number of preamble repetition transmissions, TX power can be saved.

For example, the reference ROs may be the last (consecutive or non-consecutive) N ROs among a plurality of ROs for which the UE repeatedly transmits the preamble. In this case, the N value may be predefined, but is not limited thereto. The base station may configure/indicate the N value to the UE through upper layer signaling.

In addition, if the UE has completed the preamble repetition transmission more than a certain number of times (e.g., the initially configured repetition number - N + 1 times), the base station may transmit the RAR to the UE based on the received preambles. The UE may actually expect the RAR to be transmitted in the RAR window that will exist after the last transmitted preamble.

For example, if the number of repetitions initially configured/indicated from the base station is 8 and the N value configured by the base station is 2, the UE may expect reception of the RAR based on the 7th RO after 7 (i.e., 8-2+1) preamble repetition transmissions.

If a proper RAR is received (i.e., a RAR with matching RA-RNTI and RAPID is received), the UE may be configured to stop the remaining repeated preamble transmissions and perform the Msg. 3 PUSCH transmission. As another example, if a proper RAR is not received, the UE may perform the last repeated transmission in the last 8th RO (after a predefined time) and expect reception of the RAR based on that RO.

If the UE expects RAR during repeated preamble transmission, the UE may be configured to calculate RA-RNTI based on a reference RO in which the last transmitted preamble exists among multiple reference ROs.

For example, the above-described method may be applied when RACH resources capable of repeated preamble transmission are distinguished from RACH resources for single preamble transmission. For example, when RACH resources are distinguished based on a preamble index within a specific RO or when RACH resources are distinguished by a base station independently setting different ROs, the above-described method may be applied.

Here, the base station may configure the RO separately indicated for the UE to request repeated transmission of Msg. 3 PUSCH as an RO capable of repeated preamble transmission.

In this case, a UE that wants to repeatedly transmit the preamble and Msg. 3 PUSCH may report to the base station the UE capability that Msg. 3 PUSCH repeated transmission is possible and/or the UE capability that preamble repeated transmission is possible. The UE may perform preamble repeated transmission through the RO configured by the base station, and the base station may configure/indicate the UE to be able to repeatedly transmit Msg. 3 PUSCH.

The examples described above may be applied to, but are not limited to, cases where RACH resources are separated for preamble repetition transmission and single preamble transmission. The examples described above may also be applied to cases where RACH resources are shared for preamble repetition transmission or single preamble transmission.

For example, the above-described example may be applied even when a specific UE performs preamble repetition transmission by selecting an arbitrary preamble index without separately distinguishing the preamble index in a specific RO. In addition, the above-described example may be applied even when a specific UE performs single preamble transmission by selecting an arbitrary preamble index.

To this end, the base station may provide start RO information and the number of repetition transmissions for starting preamble repetition transmission together with PRACH configuration for UEs to perform preamble repetition transmission. Thereafter, the base station may perform operations 1 and 2 below simultaneously.

1. Providing RAR grant for preamble detected in RO at a specific point in time
2. Providing RAR grant based on preamble detected through non-coherent (or coherent) detection from starting RO that can start preamble repeat transmission to RO at a specific point in time

The UE may perform either the following A or B actions depending on whether the UE has capability for repeated preamble transmission.

A. In a basic wireless communication system without UE capability for repeated preamble transmission, a UE expects reception of an RAR after transmitting a single preamble.
B. In an enhanced wireless communication system with UE capability for repeated preamble transmission, a UE completes repeated transmission within a RO corresponding to the number of repetitions from a start RO, calculates an RA-RNTI based on the RO, and expects reception of an RAR.

In the above-described manner, the base station may provide an RAR grant for preambles that UEs in the enhanced wireless communication system are repeatedly transmitting. And, depending on the method of distinguishing RACH resources, the problem of reducing RACH resources of terminals in the basic wireless communication system can be solved.

Embodiment 2

Embodiment 2 relates to a method for handling RO collision for PRACH repeated transmission. A UE may select an appropriate RO according to a method configured/indicated by a base station or predefined for preamble repeated transmission. However, a situation may occur in which an RO selected by the UE is dropped or postponed due to a collision with a DL/UL signal/channel, etc.

When a single preamble transmission is performed and the RO collides with another signal/channel, etc., the UE may select another RO other than the RO to transmit the preamble. However, when the RO collides with another signal/channel, etc. when repeat preamble transmission is performed, additional base station/UE operations such as RO dropping/postponement may be required.

As an example of the present disclosure, an RO in which a collision occurs may be dropped, and the dropped RO may be configured/defined to be included in the number of repeated transmissions. Hereinafter, an operation of a base station/UE based on a method of dropping an RO in which a collision occurs and including the dropped RO in the number of repeated transmissions will be described.

Embodiment 2-1

Embodiment 2-1 relates to the operation of a UE/base station according to the location of an RO in which an RO collision occurs among the ROs selected by the terminal for repeated preamble transmission.

For example, if an RO collision occurs in the first RO (i.e., the starting RO) among the ROs selected by the UE for repeated transmission, the UE may perform an operation according to Case 1 or/and Case 2 below.

Case 1: The UE may not perform (i.e., postpone) preamble repeat transmission with the RO in question (i.e., the RO where the collision occurred) as the first RO, and may perform preamble repeat transmission by selecting another RO as the first RO for repeat transmission.

Case 2: The UE may perform preamble repetition transmission with the RO as the first RO, but may drop the first RO and/or the collided RO and perform preamble repetition transmission only in the remaining ROs.

As another example, if an RO collision occurs in the last RO among the ROs selected for repeated transmission, the UE may perform an action according to Case 3 or/and Case 4 below.

Case 3: Even if the UE does not transmit an actual preamble in the last RO and drops the RO, the UE may be configured to expect reception of the RAR by determining that the start time of the RAR window is determined based on the last RO. In this case, the RA-RNTI (or MSGB-RNTI) values to be used by the UE and the base station may be calculated/defined based on the last RO.

The operation according to Case 3 may be performed when RACH resources for repeated preamble transmission and RACH resources for single preamble transmission are distinguished.

Case 4: Since the UE can know in advance that the last RO can be dropped without transmitting an actual preamble, the UE may be configured to expect reception of the RAR by determining that the start point of the RAR window is determined based on the last RO among the ROs that transmitted the actual preamble. In this case, the RA-RNTI (or MSGB-RNTI) values to be used by the UE and the base station may be calculated/defined based on the last RO among the ROs that transmitted the actual preamble.

The operation according to Case 4 may be performed when the RACH resources for repeated preamble transmission and the RACH resources for single preamble transmission are not distinguished.

As another example, a RO collision may occur in ROs other than the first RO or the last RO selected by the UE for repeated transmission. In this case, the UE may drop the collided ROs and perform repeated preamble transmission only in the remaining ROs.

Embodiment 2-2

Embodiment 2-2 relates to the operation of a UE/base station according to the reason for a collision occurring in each of the ROs selected by the UE for repeated preamble transmission (i.e., the type of signal/channel in which the collision occurred).

As an example of the present disclosure, it is assumed that the reason why a UE cannot transmit a preamble in a specific RO(s) among the ROs selected for repeated preamble transmission is a collision with another UL signal/channel.

Here, the UE may drop specific RO(s) that collide with other UL signals/channels, and include the dropped RO(s) in the number of preamble repetition transmissions. By including the dropped RO(s) in the number of preamble repetition transmissions, misunderstanding between the UE and the base station can be prevented.

As another example of the present disclosure, it is assumed that the reason why the UE cannot transmit the preamble in certain RO(s) among the ROs selected for preamble repetition transmission is a collision with another semi-static DL symbol and/or a semi-static DL signal/channel (e.g., SSB).

Here, the UE may postpone preamble transmission in ROs that collide with other semi-static DL symbols and/or semi-static DL signals/channels (e.g., SSB). And, since no misunderstanding occurs between the UE and the base station regarding preamble transmission, the UE may not include the postponed ROs in the number of repeated transmissions.

Additionally or alternatively, the UE may perform preamble repetition transmission by (re)selecting ROs equal to the total number of preamble repetition transmissions based on the above-described operations. Here, if the dropped ROs are included in the number of preamble repetition transmissions, the number of preamble repetition transmissions actually performed by the terminal may be smaller than the number of preamble repetition transmissions actually indicated.

Here, it is assumed that the preamble transmission in the last RO is postponed. Since the RO for configuring the starting point of the RAR window and the RA-RNTI is postponed, the UE may perform the last preamble transmission in the newly selected RO. Accordingly, the UE may determine that the RAR window starts based on the RO where the last preamble is transmitted, and may calculate the RA-RNTI based on the RO.

As another example, if the very last RO is dropped, the UE may perform the action according to Case 3 or Case 4 described above.

The operations of the UE/base station disclosed in each of Embodiment 2, Embodiment 2-1, and Embodiment 2-2 may be performed independently or may be performed comprehensively.

Embodiment 3

Embodiment 3 relates to a RAPID hopping scheme for PRACH repeated transmission.

When a UE performs repeated preamble transmission, a preamble index randomly determined (in the MAC layer) (or set/instructed by the base station for contention-free random access (CFRA)) may be maintained each time a preamble is transmitted. However, when considering inter-cell interference randomization, etc., the preamble index may hop each time a preamble is transmitted.

Specifically, the base station may configure/indicate the UE to perform preamble index hopping operation through upper layer signaling. In addition, the preamble index hopping operation may be applied when the RACH resource for preamble repetition transmission and the RACH resource for single preamble transmission are separated. In this case, the preamble index hopping may be configured/indicated/defined to operate only within the RACH resource for preamble repetition transmission.

For example, if the RO is shared but the RACH resources for repeated transmission and single transmission are separated at the preamble level, the base station may predefine/configure a preamble index pool for repeated transmission. And, preamble index hopping may be performed only within the preamble index pool.

As another example, when RACH resources for preamble repetition transmission and single preamble transmission are separated at the RO level, preamble index hopping may be performed only within the RO allocated for preamble repetition transmission.

As an example of the present disclosure, a first preamble index may be randomly selected (at the MAC layer), and the preamble index to be used for subsequent preamble repetition transmissions may be configured/defined/indicated to pseudo-randomly hop using a cell-ID or the like as a seed. Additionally or alternatively, a T-domain index (e.g., a symbol, a slot, a subframe, an SFN, etc.) may be considered as a seed for the cell-ID. Accordingly, a preamble index (to be transmitted through the corresponding RO) may be configured to be determined based on a combination of a T-domain index of the transmitted RO and the cell-ID.

Accordingly, when the UE selects the first preamble index, the preamble index to be used by the UE thereafter may be determined according to a predefined method.

Additionally or alternatively, for RO collision handling, the preamble index may be determined based on the number of preamble repetition transmissions. However, this is only an embodiment, and the preamble index may be configured to hop pseudo-randomly based on the f(frequency)-domain index, slot index, symbol index, and/or cell-ID of the RO to which the UE intends to transmit the preamble.

Here, the base station may determine the order in which the UE hops and/or transmits the preamble index based on the first selected preamble index. The base station may combine the preamble indexes received from each RO based on the above-described information (e.g., the order in which the preamble index hops and/or transmits the preamble index, etc.).

In this case, since the UE hops the preamble index when performing each preamble repetition transmission, it is necessary to determine what value the RAPID value required for the UE to confirm the RAR grant will be indicated to by the base station.

For example, among the ROs for repeated preamble transmission, the preamble index value selected by the UE (at the MAC layer) in the starting RO may be configured/defined to be used as RAPID.

As another example, the preamble index to be used for the last RO after multiple preamble hoppings (i.e., regardless of actual transmission, taking into account RO dropping, etc.) may be configured/defined to be used as RAPID.

As another example, the index of the last preamble transmitted among the preambles transmitted by the actual UE may be configured/defined to be used as RAPID.

In the embodiments described above, the method of calculating RA-RNTI based on reference RO may be applied to the method of calculating MSGB-RNTI based on reference RO. In addition, the embodiments described above may be configured/applied to other UL signals/channels such as PUSCH/PUCCH.

The above-described embodiments may be configured/applied to other UL signals/channels such as PUSCH/PUCCH. In addition, the above-described embodiments can also be included as one of the implementation methods of the present disclosure. In addition, the above-described embodiments may be implemented independently, but can also be implemented in the form of a combination (or merge) of some embodiments. Information on whether the above-described embodiments are applied (or information on the rules of the above-described embodiments) may be defined so that the base station notifies the UE through a predefined signal (e.g., a physical layer signal or a higher layer signal). The higher layer may include, for example, one or more of functional layers such as MAC, RLC, PDCP, RRC, and SDAP.

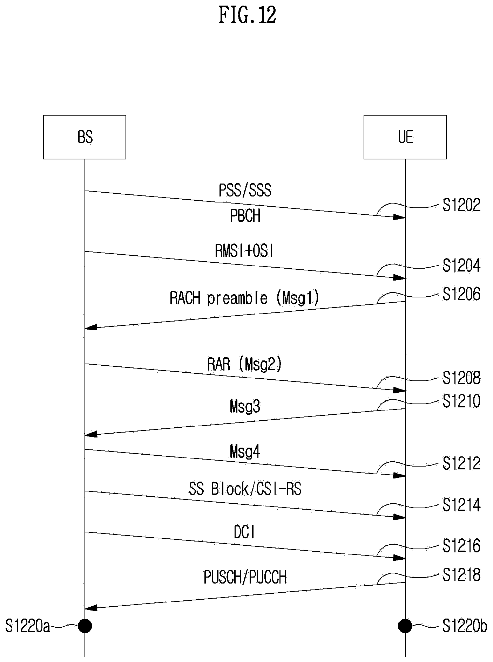

FIG. 12 is a diagram for describing the signaling procedure of the network side and the UE according to an embodiment of the present disclosure.

FIG. 12 shows an example of signaling between a network side and a terminal (UE) in an M-TRP situation to which the Embodiments (e.g., Embodiment 1, Embodiment 1-1, Embodiment 1-2, Embodiment 1-3, Embodiment 2, Embodiment 2-1, Embodiment 2-2 or a combination of one or more of the detailed Embodiments) of the present disclosure described above may be applied.

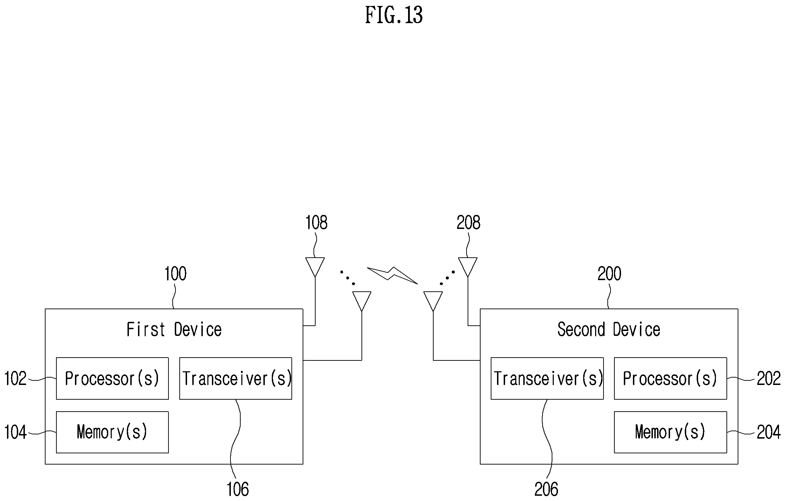

Here, the UE/network side is an example and may be replaced with various devices as described with reference to FIG. 13. FIG. 12 is for convenience of explanation and does not limit the scope of the present disclosure. Additionally, some step(s) shown in FIG. 12 may be omitted depending on the situation and/or settings. Additionally, in the operation of the network side/UE in FIG. 12, the above-described uplink transmission/reception operation, M-TRP-related operation, etc. may be referenced or used.

In the following description, the network side may be one base station including multiple TRPs, or may be one cell including multiple TRPs. Alternatively, the network side may include a plurality of remote radio heads (RRH)/remote radio units (RRU). For example, ideal/non-ideal backhaul may be set between TRP 1 and TRP 2, which constitute the network side. In addition, the following description is based on multiple TRPs, but it can be equally extended and applied to transmission through multiple panels/cells, and can also be extended and applied to transmission through multiple RRHs/RRUs, etc.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station (gNB, etc.), etc. As described above, a TRP may be classified according to information on a CORESET group (or a CORESET pool) (e.g., a CORESET index, an ID).

For example, if a single UE is configured to transmit and receive with multiple TRPs (or cells), this may mean that multiple CORESET groups (or CORESET pools) are configured for the single terminal. The configuration of such CORESET groups (or CORESET pools) may be performed via higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

Referring to Fig. 12, a base station (e.g., BS) may periodically transmit SSB to a terminal (S1202). Here, the SSB may include PSS/SSS/PBCH. The base station may transmit SSB to a UE using beam sweeping.

The base station may transmit remaining minimum system information (RMSI) and other system information (OSI) to the terminal (S1204). RMSI may include information required for the terminal to initially access the base station (e.g., PRACH configuration information). Here, the UE may identify the best SSB after performing SSB detection.

Thereafter, the UE may transmit a RACH preamble (Message 1, Msg1) to the base station using the PRACH resource linked/corresponding to the index (i.e., beam) of the best SSB (S1206).

The beam direction of the RACH preamble may be associated with a PRACH resource. The association between the PRACH resource (and/or the RACH preamble) and the SSB index can be established via system information (e.g., RMSI).

Here, the UE may perform PRACH preamble repetition transmission. The UE may perform PRACH preamble repetition transmission based on configuration information related to PRACH repetition transmission received from the base station.

Thereafter, as part of the RACH process, the base station may transmit a Random Access Response (RAR) (Msg2) to the terminal in response to the PRACH preamble (S1208).

The RAR may include at least one of a field related to PUSCH repeated transmission, a field for indicating whether to repeat PUSCH preamble transmission, or a PUSCH time/frequency resource field.

The UE may transmit Msg. 3 PUSCH (e.g., RRC Connection Request) using the uplink grant in the RAR (S1210).

The UE may perform PUSCH repeated transmission based on RAR. Here, the number of PUSCH repeated transmissions may be based on the number of PRACH preamble repeated transmissions.

The base station may transmit a contention resolution message (Msg4) to the terminal (S1212). Msg4 may include RRC connection setup.

When an RRC connection is established between a base station and a UE through the RACH process, subsequent beam alignment may be performed based on SSB/CSI-RS (in downlink) and SRS (in uplink). For example, the UE may receive SSB/CSI-RS (S1214). SSB/CSI-RS may be used by the UE to generate beam/CSI report.

And, the base station may request the UE to report beam/CSI through DCI (S1216). Here, the UE may generate the beam/CSI report based on SSB/CSI-RS and transmit the generated beam/CSI report to the base station through PUSCH/PUCCH (S1218). The beam/CSI report may include beam measurement results, information about preferred beams, etc. The base station and the UE may switch beams based on the beam/CSI report (S1220a, S1220b) .

Thereafter, the UE and the base station may perform the embodiments described/proposed above. For example, the UE and the base station may process information in the memory and transmit a wireless signal or process a received wireless signal and store it in the memory based on the configuration information obtained in the network access procedure (e.g., system information acquisition procedure, RRC connection procedure via RACH, etc.) according to the embodiment of the present disclosure. Here, the wireless signal may include at least one of PDCCH, PDSCH, and RS (Reference Signal) in the case of downlink, and at least one of PUCCH, PUSCH, and SRS in the case of uplink.

<u>General Device to which the Present Disclosure may be applied</u>

FIG. 13 is a diagram which illustrates a block diagram of a wireless communication system according to an embodiment of the present disclosure.

In reference to FIG. 13, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/-circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206.

One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure. One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of performing uplink (UL) transmission by a user equipment (UE) in a wireless communication system, the method comprising:

   receiving, from a base station, configuration information related to repeated transmission of a physical random access channel (PRACH) preamble; and
   performing repeated transmission of the PRACH preamble in at least one of a plurality of ROs (random access channel occasions) based on the configuration information,
   wherein based on a specific RO among the plurality of ROs colliding with a specific signal or a specific channel: the specific RO is dropped, and a RA(random access)-RNTI(radio network temporary identifier) is calculated based on at least one reference RO determined from a remaining ROs excluding the specific RO among the plurality of ROs.

2. The method of claim 1, wherein:
   among the plurality of ROs, a single RO selected from the remaining ROs excluding the specific RO is a first RO or an last RO among the remaining ROs.

3. The method of claim 1, wherein:

   information on the at least one reference RO is received from the base station through a higher layer signaling, and
   the higher layer signaling includes the configuration information related to repeated transmission of the PRACH preamble.

4. The method of claim 1, wherein:
   based on a higher layer signaling including information on the at least one reference RO being not received from the base station, the at least one reference RO is determined as a predefined default RO.

5. The method of claim 1, wherein:

   a random access response (RAR) including a SFN (system frame number) value corresponding to a single reference RO is received from the base station, and
   whether the RAR is an RAR for the UE is determined through the RA-RNTI and the SFN value calculated based on the single reference RO.

6. The method of claim 1, wherein:
   based on a plurality of reference ROs being determined from the remaining ROs excluding the specific RO among the plurality of reference ROs, the RA-RNTI is calculated based on the reference RO from which an last PRACH preamble is transmitted among the plurality of reference ROs.

7. The method of claim 1, wherein:
   first UE capability information indicating that repeated transmission of the PRACH preamble is supported and second UE capability information indicating that repeated transmission of physical uplink shared channel (PUSCH) based on RAR are transmitted to the base station.

8. The method of claim 1, wherein:
the PRACH preamble is transmitted to the base station from the remaining ROs except for the specific RO among the plurality of ROs.

9. The method of claim 1, wherein:
the RA-RNTI is calculated based on an index of a first symbol of the at least one reference RO, an index of a first slot of the at least one reference RO in a system frame, an index of the at least one reference RO in a frequency domain, and an index of an uplink carrier used for repeated transmission of the PRACH preamble.

10. The method of claim 1, wherein:
the configuration information related to a preamble index hopping operation associated with repeated transmission of the PRACH preamble is received from the base station.

11. The method of claim 10, wherein:
the configuration information related to the preamble index hopping operation includes at least one of information on a preamble index pool for repeated transmission of the PRACH preamble or information on an RO allocated for preamble index hopping.

12. A user equipment (UE) that performs uplink transmission in a wireless communication system, the UE comprising:

at least one transceiver; and
at least one processor connected to the at least one transceiver,
wherein the at least one processor is configured to:

receive, from a base station through the at least one transceiver, configuration information related to repeated transmission of a physical random access channel (PRACH) preamble; and
perform repeated transmission of the PRACH preamble in at least one of a plurality of ROs (random access channel occasions) based on the configuration information,
wherein based on a specific RO among the plurality of ROs colliding with a specific signal or a specific channel: the specific RO is dropped, and a RA(random access)-RNTI(radio network temporary identifier) is calculated based on at least one reference RO determined from a remaining ROs excluding the specific RO among the plurality of ROs.

13. A method of performing uplink reception by a base station in a wireless communication system, the method comprising:

transmitting, to a user equipment (UE), configuration information related to repeated transmission of a physical random access channel (PRACH) preamble; and
performing repeated reception of the PRACH preamble in at least one of a plurality of ROs (random access channel occasions) based on the configuration information,
wherein based on a specific RO among the plurality of ROs colliding with a specific signal or a specific channel: the specific RO is dropped, and a RA(random access)-RNTI(radio network temporary identifier) is calculated based on at least one reference RO determined from a remaining ROs excluding the specific RO among the plurality of ROs.

14. A base station that performs uplink reception in a wireless communication system, the base station comprising:

at least one transceiver; and
at least one processor connected to the at least one transceiver,
wherein the at least one processor is configured to:

transmit, to a user equipment (UE) through the at least one transceiver, configuration information related to repeated transmission of a physical random access channel (PRACH) preamble; and
perform repeated reception of the PRACH preamble in at least one of a plurality of ROs (random access channel occasions) based on the configuration information,
wherein based on a specific RO among the plurality of ROs colliding with a specific signal or a specific channel: the specific RO is dropped, and a RA(random access)-RNTI(radio network temporary identifier) is calculated based on at least one reference RO determined from a remaining ROs excluding the specific RO among the plurality of ROs.

15. A processing device configured to control a user equipment (UE) to perform uplink transmission in a wireless communication system, the processing device comprising:

   at least one processor; and
   at least one computer memory operatively coupled to the at least one processor and storing instructions for performing operations upon being executed by the at least one processor;
   the operations include:

      receiving, from a base station, configuration information related to repeated transmission of a physical random access channel (PRACH) preamble; and
      performing repeated transmission of the PRACH preamble in at least one of a plurality of ROs (random access channel occasions) based on the configuration information,
      wherein based on a specific RO among the plurality of ROs colliding with a specific signal or a specific channel: the specific RO is dropped, and a RA(random access)-RNTI(radio network temporary identifier) is calculated based on at least one reference RO determined from a remaining ROs excluding the specific RO among the plurality of ROs.

16. At least one non-transitory computer readable medium storing at least one instruction,
   based on the at least one instruction being executed by at least one processor, an apparatus for performing uplink transmission in a wireless communication system controls to:

   receive, from a base station, configuration information related to repeated transmission of a physical random access channel (PRACH) preamble; and
   perform repeated transmission of the PRACH preamble in at least one of a plurality of ROs (random access channel occasions) based on the configuration information,
   wherein based on a specific RO among the plurality of ROs colliding with a specific signal or a specific channel: the specific RO is dropped, and a RA(random access)-RNTI(radio network temporary identifier) is calculated based on at least one reference RO determined from a remaining ROs excluding the specific RO among the plurality of ROs.

# FIG.1

# FIG.2

# FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$  $l = 14 \cdot 2^{\mu} - 1$

# FIG.4

Freq.

1ms subframe:
14 symbols/slot

12 × 15 KHz

12 × 30 KHz

PRB

12 × 60 KHz

Time

# FIG.5

## FIG.6

EP 4 503 828 A1

# FIG.7

(a)                                      (b)

# FIG.8

FIG.9

RECEIVING CONFIGURATION INFORMATION RELATED TO REPEATED TRANSMISSION OF A PRACH PREAMBLE FROM THE BASE STATION    ~ S910

PERFORMING REPEATED TRANSMISSION OF THE PRACH PREAMBLE IN AT LEAST ONE OF A PLURALITY OF ROS BASED ON CONFIGURATION INFORMATION    ~ S920

FIG.10

TRANSMITTING CONFIGURATION INFORMATION RELATED TO REPEATED TRANSMISSION OF A PRACH PREAMBLE TO THE UE    ~ S1010

PERFORMING REPEATED RECEPTION OF THE PRACH PREAMBLE IN AT LEAST ONE OF A PLURALITY OF ROS BASED ON CONFIGURATION INFORMATION    ~ S1020

FIG.11

## FIG.12

BS

UE

PSS/SSS
PBCH
S1202

RMSI+OSI
S1204

RACH preamble (Msg1)
S1206

RAR (Msg2)
S1208

Msg3
S1210

Msg4
S1212

SS Block/CSI-RS
S1214

DCI
S1216

PUSCH/PUCCH
S1218

S1220a

S1220b

FIG.13

# INTERNATIONAL SEARCH REPORT

| | International application No. |
|---|---|
| | **PCT/KR2023/003757** |

## A. CLASSIFICATION OF SUBJECT MATTER

**H04W 74/00**(2009.01)i; **H04W 74/08**(2009.01)i; **H04L 1/08**(2006.01)i; **H04L 5/00**(2006.01)i

According to International Patent Classification (IPC) or to both national classification and IPC

## B. FIELDS SEARCHED

Minimum documentation searched (classification system followed by classification symbols)

H04W 74/00(2009.01); H04L 1/00(2006.01); H04L 1/08(2006.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프리앰블 반복 전송(preamble repetition transmission), 채널 충돌(channel collision), 랜덤 액세스 채널 오케이션(random access channel occasion), 드롭(drop) RO, 기준(reference) RO, RA-RNTI

## C. DOCUMENTS CONSIDERED TO BE RELEVANT

| Category* | Citation of document, with indication, where appropriate, of the relevant passages | Relevant to claim No. |
|---|---|---|
| A | WO 2021-033946 A1 (LG ELECTRONICS INC.) 25 February 2021 (2021-02-25)<br>See paragraphs [0128]-[0257]; and claim 4. | 1-16 |
| A | WO 2021-064223 A1 (TELEFONAKTIEBOLAGET LM ERICSSON (PUBL)) 08 April 2021 (2021-04-08)<br>See claims 6-10; and abstract. | 1-16 |
| A | CMCC. Discussion on collision handling of HD-FDD operation. R1-2109288, 3GPP TSG RAN WG1 #106b-e, e-Meeting. 01 October 2021.<br>See section 1. | 1-16 |
| A | US 2021-0029737 A1 (IDAC HOLDINGS, INC.) 28 January 2021 (2021-01-28)<br>See claims 21-25. | 1-16 |
| A | WO 2021-231816 A1 (CONVIDA WIRELESS, LLC) 18 November 2021 (2021-11-18)<br>See claims 1-4. | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 June 2023** | **04 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | | | | | | International application No. |
|---|---|---|---|---|---|---|
| Information on patent family members | | | | | | **PCT/KR2023/003757** |

| Patent document cited in search report | | | Publication date (day/month/year) | Patent family member(s) | | | Publication date (day/month/year) |
|---|---|---|---|---|---|---|---|
| WO | 2021-033946 | A1 | 25 February 2021 | CN | 114208383 | A | 18 March 2022 |
| | | | | EP | 3982689 | A1 | 13 April 2022 |
| | | | | JP | 2022-544329 | A | 17 October 2022 |
| | | | | KR | 10-2022-0046543 | A | 14 April 2022 |
| | | | | US | 11576210 | B2 | 07 February 2023 |
| | | | | US | 2021-0051731 | A1 | 18 February 2021 |
| WO | 2021-064223 | A1 | 08 April 2021 | CO | 2022004973 | A2 | 29 April 2022 |
| | | | | EP | 4042812 | A1 | 17 August 2022 |
| | | | | US | 2022-0408478 | A1 | 22 December 2022 |
| US | 2021-0029737 | A1 | 28 January 2021 | CN | 111406436 | A | 10 July 2020 |
| | | | | EP | 3718369 | A1 | 07 October 2020 |
| | | | | EP | 3718369 | B1 | 19 October 2022 |
| | | | | EP | 4132196 | A1 | 08 February 2023 |
| | | | | JP | 2021-505036 | A | 15 February 2021 |
| | | | | JP | 2022-188297 | A | 20 December 2022 |
| | | | | RU | 2745022 | C1 | 18 March 2021 |
| | | | | TW | 201933927 | A | 16 August 2019 |
| | | | | TW | I706685 | B | 01 October 2020 |
| | | | | US | 11405950 | B2 | 02 August 2022 |
| | | | | US | 2022-0330325 | A1 | 13 October 2022 |
| | | | | WO | 2019-104299 | A1 | 31 May 2019 |
| WO | 2021-231816 | A1 | 18 November 2021 | CN | 115553043 | A | 30 December 2022 |
| | | | | EP | 4151038 | A1 | 22 March 2023 |

Form PCT/ISA/210 (patent family annex) (July 2022)